# EUROPEAN PATENT SPECIFICATION

(11) **EP 1 117 152 B1**
(45) Date of publication and mention of the grant of the patent: **01.10.2003**
(21) Application number: 00128120.3
(22) Date of filing: 21.12.2000
(51) Int. Cl.: H01R 11/28

(54) **A battery terminal**
Anschlussklemme für Batterie
Borne de batterie

(30) Priority: 12.01.2000 JP 2000003511
(43) Date of publication of application: 18.07.2001
(73) Proprietor: Sumitomo Wiring Systems, Ltd., Yokkaichi-shi, Mie 510-8503 (JP)
(72) Inventor: Matsunaga, Hideki, Yokkaichi-city, Mie 510-8503 (JP)
(74) Representative: Müller-Boré & Partner Patentanwälte

(56) References cited:
- EP-A- 0 653 806
- EP-A- 0 742 606
- US-A- 4 354 726

## Description

The present invention relates to a battery terminal.

A conventional battery terminal is disclosed in Japanese Utility Model Publication No. 6-88050. This battery terminal is provided with an arcuate fastening portion to be fitted on a battery post, a pair of extending portions extending radially outward from the opposite ends of the fastening portion, and a fastening means for bringing the pair of extending portions closer to each other by a bolt and a nut to reduce a diameter of the fastening portion.

In the battery terminal of this type, if a fastening torque becomes excessively large, the extending portions come too close to each other, thereby excessively reducing a radius of curvature of the fastening portion. As a result, the battery post may undergo an abnormal deformation. Accordingly, the torque is normally controlled. By giving a proper fastening torque, the extending portions are brought closer to each other to have a proper spacing, and the radius of curvature of the fastening portion is set to a proper value, with the result that excessive fastening of the battery post can be avoided.

Although the torque is controlled, it is necessary to take a measure to meet such a situation where the torque should excessively increase beyond a normal range. As a means for preventing the battery post from being excessively fastened, a stopper in the form of a projection may be so formed on one extending portion as to come into contact with the other extending portion while the fastening torque still lies in the normal range. Thus, even if the fastening torque further increases, any further approach of the extending portions with respect to each other is restricted by the stopper.

However, in the case that the fastening torque is increased to such a degree as to deform the stopper, an excessive fastening preventing effect of the stopper cannot be expected. Thus, an improvement in reliability has been expected.

Further, EP-A-742606 A1 relates to a battery terminal used for connecting an electric cable to the electrode of a battery mounted on such as an automobile, wherein the electrode holding portion is formed of a bent metal bent round into an annular shape, and a pair of lugs is formed at both ends of the electrode holding portion.

In view of the above situation, an object of the present invention is to improve reliability of an excessive fastening preventing function.

This object is solved according to the invention by a battery terminal according to claim 1. Preferred embodiments of the invention are subject of the dependent claims.

According to the invention, there is provided a battery terminal or battery post connection device, comprising:
an arcuate fastening portion to be fitted on a battery post,
a pair of extending portions extending from the arcuate fastening portion, and
a fastening means for deforming the fastening portion to reduce its diameter by bringing the pair of extending portions closer to each other,
wherein the pair of extending portions comprises:
a primary stopper for restricting any further approach of the extending portions with respect to each other by being brought into a contact state when a spacing between the extending portions is narrowed to a specified (predetermined or predeterminable) degree, and
a secondary stopper for restricting any further approach of the extending portions with respect to each other by being brought substantially into a contact state when the spacing between the extending portions is further narrowed from the state where the primary stopper is substantially in the contact state while being accompanied by deformation of the primary stopper and/or the extending portions.

According to a preferred embodiment of the invention, the extending portions extend radially outward from opposite ends of the arcuate fastening portion.

When the bolt and the nut of the fastening means are fastened with a proper fastening torque set in advance, the pair of extending portions are brought closer to each other to have a proper spacing therebetween, and the battery post is fastened with a proper strength.

In the case that the fastening torque is larger than the proper value, the extending portions are brought closer to each other to narrow the spacing to a value smaller than the proper spacing. However, while the spacing between the extending portions still lies in a permissible range where fastening to the battery post is assumed to be normal, the primary stopper is brought into the contact state to restrict any further approach of the extending portions with respect to each other. This prevents the battery terminal from being excessively fastened to the battery post.

Further, in the case that the fastening torque exceeds a value bearable by the primary stopper, the extending portions are brought further closer to each other while being accompanied by deformation of the primary stopper or the extending portions. However, while the spacing between the extending portions still lies in the permissible range where fastening to the battery post is assumed to be normal, the secondary stopper is brought into the contact state to restrict any further approach of the extending portions with respect to each other. This prevents a fastening force exerted on the batter post from exceeding beyond the permissible range.

Since two excessive fastening preventing functions are provided by providing the secondary stopper in addition to the primary stopper, reliability of the excessive fastening preventing function is higher as compared to a case where only one stopper is provided.

Preferably, an elastically restoring force of the primary stopper and/or the extending portions being deformed acts to separate the extending portions away from each other while the secondary stopper is restricting any further approach of the extending portions with respect to each other.

Since the elastically restoring force of the primary stopper or the extending portions assists the approach restricting operation of the secondary stopper while the secondary stopper is restricting any further approach of the extending portions with respect to each other, the approach restricting function is better as compared to a case where only the secondary stopper restricts such an approach of the extending portions.

Further preferably, the pair of extending portions are brought closer to each other by means of a bolt and a nut of the fastening means.

Most preferably, a value of a fastening torque required to void a function of restricting any further approach of the extending portions with respect to each other by deforming the secondary stopper is set larger than that of a fastening torque required to fracture the bolt.

In the case that the value of the fastening torque is larger than the value bearable by the secondary stopper, the bolt is fractured before the secondary stopper is deformed by the fastening torque. Thus, deformation of the secondary stopper can be prevented.

According to a further preferred embodiment, the primary stopper comprises a rib formed preferably by bending an outer end of one extending portion at an angle different from 0° or 180°, preferably substantially at right angles, and a receiving surface which is so formed on the other extending portion as to enable a contact of the rib therewith.

The rib of the primary stopper can be easily formed by bending.

Preferably, the secondary stopper comprises substantially tubular projecting portions formed in the pair of extending portions so as to project substantially toward each other.

Further preferably, the substantially tubular projecting portions are formed by applying burring to the edges of bolt insertion holes of the respective extending portions. Still further preferably, the secondary stopper comprises tubular projecting portions formed by applying burring to the edges of bolt insertion holes formed in the pair of extending portions so as to project toward each other.

The tubular projecting portions of the secondary stopper can be easily formed by burring. Since the tubular projecting portions formed by burring are excellent in strength, they are suitably used as the secondary stopper which is required to have a higher strength than the primary stopper.

Most preferably, both extending portions are formed each with the primary stopper and the secondary stopper.

These and other objects, features and advantages of the present invention will become apparent upon reading of the following detailed description of preferred embodiments and accompanying drawings. It should be understood that even though embodiments are separately described, single features thereof may be combined to additional embodiments.
FIG. 1 is a perspective view of a first embodiment of the invention,
FIG. 2 is a plan view of the first embodiment,
FIG. 3 is a plan view of the first embodiment with primary stoppers in their contact states,
FIG. 4 is a side view of the first embodiment,
FIG. 5 is a side view of the first embodiment with the primary stoppers in their contact states,
FIG. 6 is a side view of the first embodiment with a secondary stopper in its contact state,
FIG. 7 is a bottom view of the first embodiment,
FIG. 8 is a perspective view of a second embodiment of the invention,
FIG. 9 is a side view of the second embodiment with primary stoppers in their contact states,
FIG. 10 is a side view of a third embodiment of the invention, and
FIG. 11 is a bottom view of the third embodiment.

### [First Embodiment]

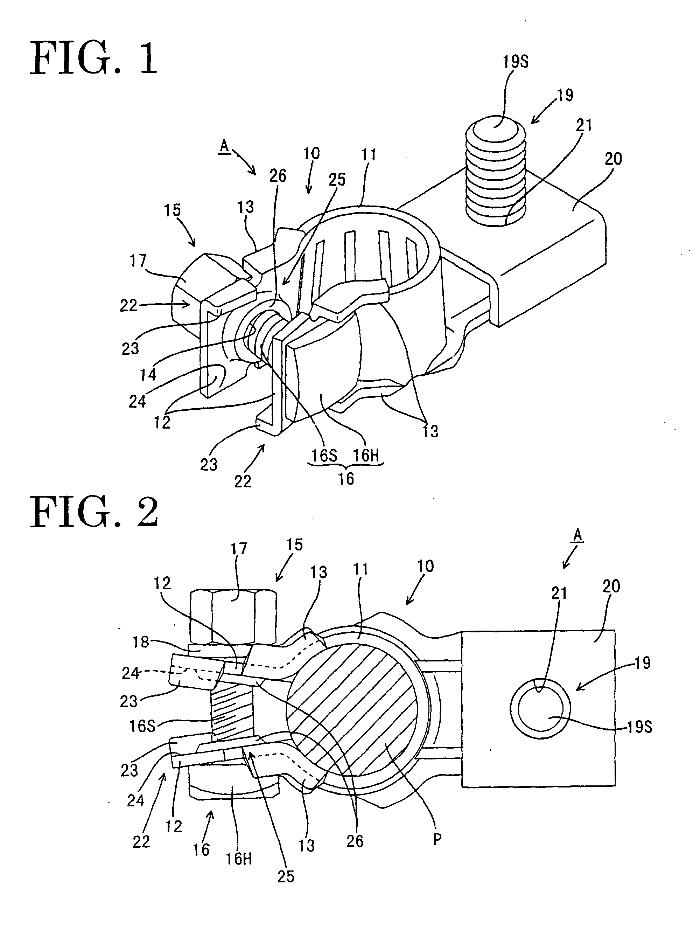

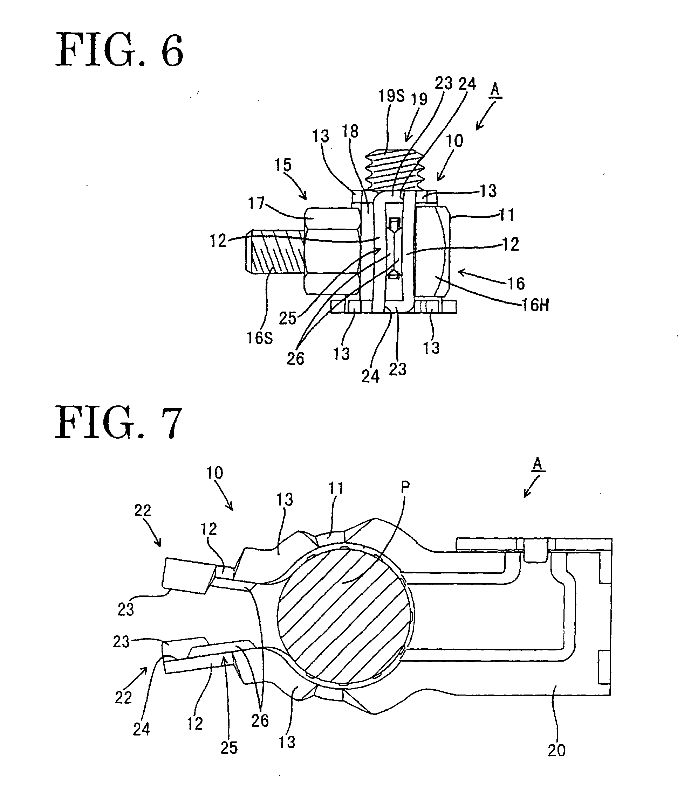

Hereinafter, a first preferred embodiment of the invention is described with reference to FIGS. 1 to 7.

An overall summary of this embodiment is briefly described. A battery terminal A is comprised of a terminal main body 10 to be mounted or fixed on a battery post P and a fastening means 15 for fastening the terminal main body 10 to the battery post P. The terminal main body 10 is integrally or unitarily provided with an arcuate fastening portion 11 to be fitted on or arranged substantially surrounding at least a portion of the battery post P and a pair of extending portions 12 extending or projecting preferably substantially radially outward or away from the substantially opposite ends of the arcuate fastening portion 11. The terminal main body 10 is formed with primary stoppers 22 and a secondary stopper 25, and a stud bolt 19 for connecting an unillustrated wire with the battery terminal A is or can be mounted thereon. The fastening means 15 is comprised of a bolt 16 and a nut 17, and the pair of extending portions 12 are brought or can be closer to each other by fastening the nut 17 to the bolt 16, thereby bending or deforming the fastening portion 11 and/or reducing a diameter of the fastening portion 11.

In the following description, a direction of a center axis of the fastening portion 11 is referred to as vertical direction, and a direction in which the extending portions 12 project from the fastening portion 11 is referred to as forward direction.

The fastening portion 11 is substantially elastically deformable substantially in radial directions to increase and reduce the inner diameter thereof, and the inner diameter thereof in a free state where no force acts is set larger than the outer diameter of the battery post P. Reinforcing portions 13 are so formed at the upper and lower ends of the fastening portion 11 as to be substantially continuous with the upper and lower edges of the extending portions 12. The reinforcing portions 13 bulge out substantially at right angles, and enable the extending portions 12 and the opposite ends of the arcuate fastening portion 11 to substantially integrally displace.

The extending portions 12 are in the form of substantially rectangular flat plates, and are obliquely opposed to each other such that the front ends thereof are wider apart in the free state. When the extending portions 12 are brought closer to each other, the inner diameter of the arcuate fastening portion 11 is gradually reduced so that the fastening portion 11 fastens or is fastened or affixed to the outer surface of the battery post P. As being brought closer to each other, the two extending portions 12 change their orientations such that opposed surfaces thereof gradually become more parallel. In a substantially middle position of one extending portion 12 is formed a bolt insertion hole 14 corresponding to that of the other extending portion 12.

The bolt 16 constructing or being part of the fastening means is comprised of an externally threaded portion 16S and a substantially rectangular or polygonal head 16H integrally or unitarily formed at one end of the externally threaded portion 16S. A dimension of one side of the head 16H is set slightly smaller than a spacing between the upper and lower reinforcing portions 13. With the externally threaded portion 16S of the bolt 16 inserted through the bolt insertion holes 14, a portion of the head 16H is or can be held between the upper and lower reinforcing portions 13 without leaving almost any clearance. In other words, the rotation of the bolt 16 about its longitudinal axis is restricted by the engagement of the head 16H and the reinforcing portions 13. The nut 17 is screwed on the leading end (a portion projecting out from the extending portion 12 distant from the head 16H) of the externally threaded portion 16S of the bolt 16. It should be noted that a washer 18 is or may be provided between the nut 17 and the extending portion 12. When the nut 17 is screwed on the bolt 16 in a direction closer to the head 16H, the two extending portions 12 held between the nut 17 and the head 16H are displaced to approach each other, thereby reducing a diameter of the fastening portion 11.

The stud bolt 19 is mounted in a holder 20 substantially continuously formed with the rear bottom end of the fastening portion 11. The holder 20 is substantially box-shaped and has an exposure hole 21 formed in its upper surface. The stud bolt 19 is mounted such that a substantially rectangular or polygonal head (not shown) thereof is accommodated in the holder 20 while its rotation is restricted, and an externally threaded portion 19S thereof projects upward through the exposure hole 21. A mount fitting (not shown) secured to an end of the wire (not shown) is fitted on the stud bolt 19, and is fixed thereto by a nut (not shown).

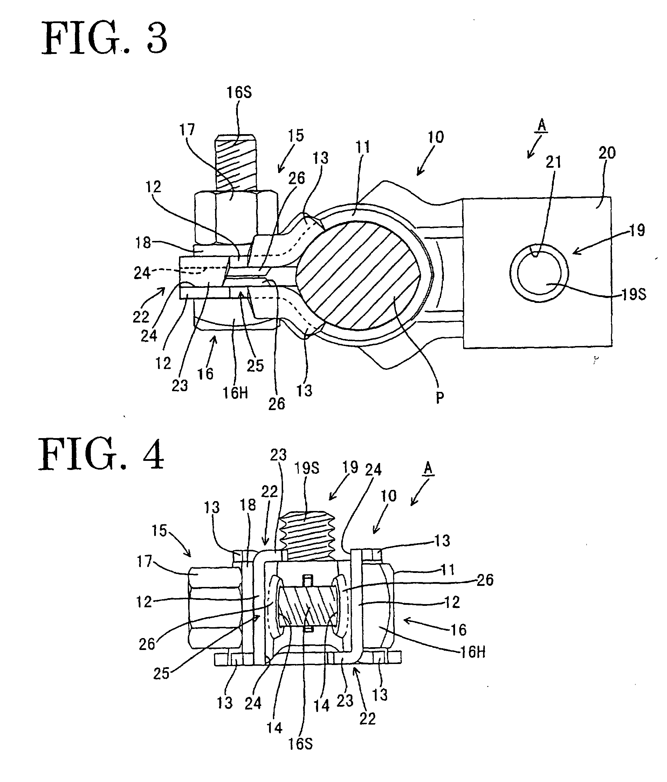

The extending portions 12 are formed with a pair of upper and lower primary stoppers 22 each formed of or comprising a rib 23 and a receiving surface 24. In the upper primary stopper 22, the rib 23 is formed preferably by bending a bottom end of one extending portion 12 (left one in FIGS. 4 to 6) so as to extend substantially at right angles from this extending portion 12 toward the mating extending portion 12 (right one in FIGS. 4 to 6), and a bottom end portion of the inner surface of the other extending portion 12 in which the rib 23 is not formed at the upper end serves as the receiving surface 24. Since the reinforcing portion 13 is not formed by bending at the upper end where the receiving surface 24 is formed, the receiving surface 24 is substantially flat in preferably its entire area.

These primary stoppers 22 function to restrict any further approach of the extending portions 12 with respect to each other by the contact of the facing ribs 23 and receiving surfaces 24 when the extending portions 12 are brought closer to a specified (predetermined or predeterminable) degree.

The secondary stopper 25 is formed of a pair of substantially tubular projecting portions 26 formed on the extending portions 12. The projecting portions 26 are formed e.g. by applying burring to the edges of the bolt insertion holes 14, and project toward each other from the inner surfaces of the corresponding extending portions 12. Alternatively, the projecting portions 26 may be formed by bending tongues or the like projecting inwardly from the edges of the bolt insertion hole 14, so as to form circumferentially spaced preferably arcuate projections. Moreover, the projecting portions 26 may be formed by integrally affixing a separate tubular portion e.g. by soldering or the like. The two projecting portions 26 preferably have the substantially same radial dimension. A spacing between the projecting portions 26 is set larger than the one between the ribs 23 and the receiving surfaces 24 of the primary stoppers 22. The secondary stopper 25 functions to restrict any further approach of the extending portions 12 with respect to each other by the contact of the projecting ends of the projecting portions 26 when the extending portions 12 are brought closer to each other to a specified(predetermined or predeterminable) degree.

Next, how this embodiment acts is described.

Before the battery terminal A of this embodiment is mounted on the battery post P, a fastening torque of the bolt 16 and the nut 17 is set at a proper value. When the nut 17 is screwed down on the bolt 16 with the proper fastening torque with the fastening portion 11 loosely fitted on the battery post P, the pair of extending portions 12 are brought closer to each other to have a proper spacing and the battery post P is fastened with a proper strength. At this time, the ribs 23 and the receiving surfaces 24 of the primary stoppers 22 are not in contact and the projecting portions of the second stopper 25 are left apart.

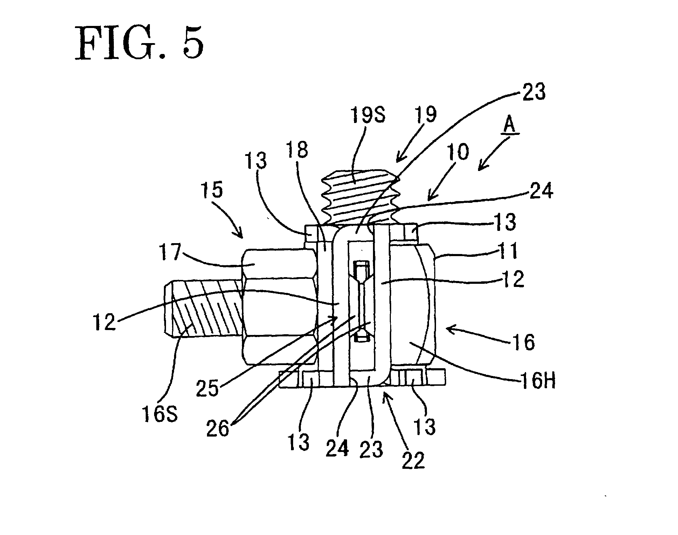

If the fastening torque mistakenly becomes larger than the suitable value, the extending portions 12 are brought closer to have a spacing shorter than the proper spacing. While the spacing of the extending portions 12 still lies in a permissible range where fastening of the battery terminal A to the battery post P is assumed to be normal, the ribs 23 and the receiving surfaces 24 of the primary stoppers 22 come into contact with each other as shown in FIGS. 3 and 5, thereby restricting any further approach of the extending portions 12 with respect to each other. In this way, excessive fastening of the battery terminal A to the battery post P can be prevented.

If the fastening torque becomes larger than a value bearable by the primary stoppers 22, the extending portions 12 are deformed to curve such that the middle portions thereof (where the bolt insertion holes 14 are formed) with respect to vertical direction are brought closer with the ribs 23 held in contact with the receiving surfaces 24 without being displaced. When the spacing between the middle portions of the extending portions 12 reaches a specified value, the projecting ends of the projecting portions 26 of the secondary stopper 25 come into contact with each other, thereby restricting any further approach of the middle portions of the extending portions 12.

The inner diameter of the fastening portion 11 is not reduced in the contact state of the secondary stopper 25 since the spacing between the outer edges of the extending portions 12 is left unchanged from the one when the primary stoppers 22 reached their contact states. Thus, the fastening force to the battery post P is not increased, i.e. the proper fastened state is maintained during a transitional stage from the contact states of the primary stoppers 22 to the contact state of the secondary stopper 25. In other words, excessive fastening can be securely prevented by the secondary stopper 25 even if the excessive fastening preventing function of the primary stoppers 22 does not work.

Since two excessive fastening preventing functions are provided by providing the secondary stopper 25 in addition to the primary stoppers 22 in this embodiment, reliability of the excessive fastening preventing function is higher as compared to a case where only one stopper is provided.

In a state where any further approach of the extending portions 12 with respect to each other is restricted by the secondary stopper 25, elastically restoring forces of the extending portions 12 deformed to curve act as forces to separate the middle portions of the extending portions 12. In other words, while the second stopper 25 restricts any further approach of the extending portions 12 with respect to each other, the elastically restoring forces of the extending portions 12 assist such a restricting operation of the secondary stopper 25. Therefore, the approach restricting function is better as compared to a case where the secondary stopper 25 solely restricts any further approach of the extending portions 12 with respect to each other.

A value of the fastening torque required to void the approach restricting function of the secondary stopper 25 by deforming the projecting portions 26 is set larger than a value of the fastening torque required to fracture the bolt 16. Accordingly, if the value of the fastening torque becomes larger than a value bearable by the secondary stopper 25, the bolt 16 is fractured before the projecting portions 26 are deformed by the fastening torque, and the projecting portions 26 are released from the contact state. Thus, deformation of the projecting portions 26 can be prevented.

The ribs 23 of the primary stoppers 22 can preferably be easily formed by bending.

The projecting portions 26 of the second stopper 25 can also be easily formed preferably by burring. Since the projecting portions 26 formed by burring is stronger than rib-shaped ones formed by bending at right angles, such projecting portions 26 are suitably used as the secondary stopper 25 which is required to have a higher strength than the primary stoppers 22.

### [Second Embodiment]

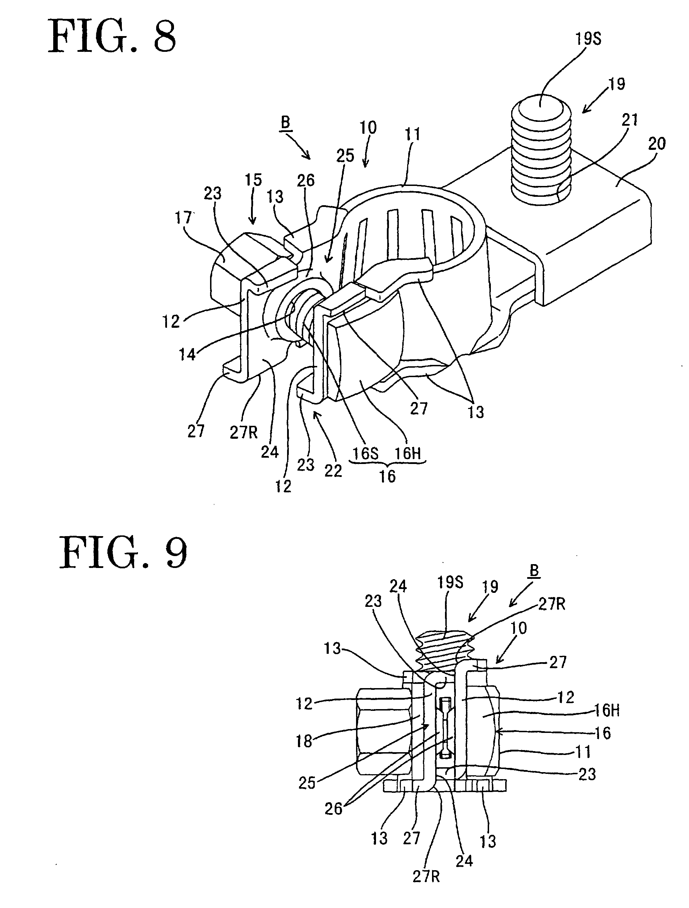

Next, a second preferred embodiment of the invention is described with reference to FIGS. 8 and 9. A battery terminal B of this embodiment differs from the first embodiment in the construction of the primary stoppers 22. Since the other construction is similar or same as in the first embodiment, no description is given on the construction, action and effects thereof by identifying it by the same reference numerals.

In the extending portion 12 at the side (right side in FIG. 9) where the receiving surface 24 of the upper primary stopper 22 is formed, a rotation restricting portion 27 is formed to restrict the rotation of the head 16H of the bolt 16 by bending an upper end outward, and an arcuate or bent surface 27R is formed on the inner surface of this bent portion (upper end of the extending portion 12). Accordingly, the receiving surface 24 of this extending portion 12 is set in a substantially flat area slightly below the arcuate upper end.

In the lower primary stopper 22 as well, a rotation restricting portion 27 for restricting the rotation of the washer 18 is formed by bending outward the bottom end of the extending portion 12 where the receiving surface 24 is formed. An arcuate or bent surface 27R is formed at the bent bottom end. Thus, the receiving surface 24 with which the rib 23 is brought or bringable into contact is set in a substantially flat area slightly above the arcuate surface 27R.

In the second embodiment, the ribs 23 can be securely and stably brought into contact with the receiving surfaces 24 while the rotation restricting portions 27 are formed in the areas where the receiving surfaces 24 are formed.

Similar to the first embodiment, the projecting portions 26 as the secondary stopper 25 are formed at the edges of the bolt insertion holes 14.

### [Third Embodiment]

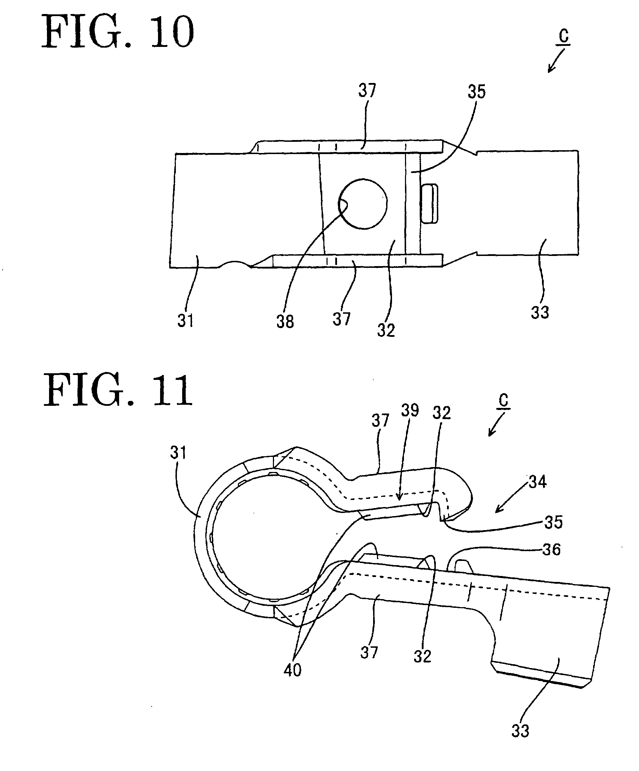

Next, a third preferred embodiment of the invention is described with reference to FIGS. 10 and 11. A battery terminal C of this embodiment is comprised of a fastening portion 31, a pair of extending portions 32 projecting preferably substantially radially outward from the preferably opposite ends of the arcuate fastening portion 31, and a barrel portion 33 formed by extending a free end of one extending portion 32. A wire (not shown) is connected with the barrel portion 33 by crimping. A primary stopper 34 includes a rib 35 and a receiving surface 36. The rib 35 is formed e.g. by bending a free end of the extending portion 32 having no barrel portion 33 inwardly at an angle different from 0° or 180°, preferably substantially at right angles, and the inner surface of the extending portion 12 having the barrel portion 33 serves as the receiving surface 36. A rib-shaped reinforcing portion 37 bulging outwardly is or can be formed in an area extending from the upper end of the fastening portion 31, to the upper end of the extending portion 32 and further to the upper end of the rib 35. A reinforcing portion 37 is or can be similarly formed at the bottom ends. The reinforcing portions 37 have not only a function of displacing the opposite ends of the arcuate fastening portion 31 and the extending portions 32 together, but also a function of restricting the rotation of a substantially rectangular or polygonal head of an unillustrated bolt at the extending portion 32. Further, the reinforcing portions 37 restrict an inclination of the rib 35 with respect to the extending portion 32, with the result that a function of the rib 35 and the receiving surface 36 to restrict any further approach of the extending portions 32 with respect to each other can be securely fulfilled. Similar to the first embodiment, tubular projecting portions 40 as a secondary stopper 39 are formed at the edges of bolt insertion holes 38.

### [Other Embodiments]

The present invention is not limited to the above described and illustrated embodiments. For example, following embodiments are also embraced by the technical scope of the invention as defined in the claims. Besides_these embodiments, various changes can be made without departing from the scope of the invention as defined in the claims.
(1) Although the primary stoppers are formed by bending the ends of the extending portions and the secondary stopper is formed by applying burring to the edges of the bolt insertion holes according to the foregoing embodiments, the primary and second stoppers may be formed in other positions by other methods.
(2) Although the tubular projecting portions constructing the second stopper are formed in both of the pair of extending portions in the foregoing embodiments, one projecting portion may be formed in either one of the extending portions according to the present invention.
(3) In the foregoing embodiment, the extending portions are deformed and their elastically restoring forces function as a reaction force against the fastening torque when the secondary stopper is in the contact state. However, according to the invention, the secondary stopper may be brought into the contact state without the extending portions being deformed (without action of the elastically restoring forces of the extending portions) when the primary stoppers are deformed to cancel their contact states.

### LIST OF REFERENCE NUMERALS

- A: battery terminal
- P: battery post
- 11: fastening portion
- 12: extending portion
- 14: bolt insertion hole
- 15: fastening means
- 16: bolt
- 17: nut
- 22: primary stopper
- 23: rib
- 24: receiving surface
- 25: secondary stopper
- 26: tubular projecting portion
- B, C: battery terminal
- 31: fastening portion
- 32: extending portion
- 34: primary stopper
- 35: rib
- 36: receiving surface
- 38: bolt insertion hole
- 39: secondary stopper
- 40: tubular projecting portion

## Claims

1. A battery terminal (A-C), comprising:
an arcuate fastening portion (11; 31) to be fitted on a battery post (P),
a pair of extending portions (12; 32) extending from the arcuate fastening portion (11; 31), and
a fastening means (15) for deforming the fastening portion (11; 31) to reduce its diameter by bringing the pair of extending portions (12; 32) closer to each other,
wherein the pair of extending portions (12; 32) comprises:
a primary stopper (22; 34) for restricting any further approach of the extending portions (12; 32) with respect to each other by being brought into a contact state when a spacing between the extending portions (12; 32) is narrowed to a specified degree, **characterized in that**
the battery terminal further comprising
a secondary stopper (25; 39) for restricting any further approach of the extending portions (12; 32) with respect to each other by being brought substantially into a contact state when the spacing between the extending portions (12; 32) is further narrowed from the state where the primary stopper (22; 34) is substantially in the contact state while being accompanied by deformation of the primary stopper (22; 34) and/or the extending portions (12; 32).

2. A battery terminal according to claim 1, wherein the extending portions (12; 32) extend radially outward from opposite ends of the arcuate fastening portion (11; 31).

3. A battery terminal according to one or more of the preceding claims, wherein an elastically restoring force of the primary stopper (22; 34) and/or the extending portions (12; 32) being deformed acts to separate the extending portions (12; 32) away from each other while the secondary stopper (25; 39) is restricting any further approach of the extending portions (12; 32) with respect to each other.

4. A battery terminal according to one or more of the preceding claims, wherein the pair of extending portions (12; 32) are brought closer to each other by means of a bolt (16) and a nut (17) of the fastening means (15).

5. A battery terminal according to claim 4, wherein a value of a fastening torque required to void a function of restricting any further approach of the extending portions (12; 32) with respect to each other by deforming the secondary stopper (25; 39) is set larger than that of a fastening torque required to fracture the bolt (16).

6. A battery terminal according to one or more of the preceding claims, wherein the primary stopper (22; 34) comprises at least one rib (23; 35) formed on one extending portion (12; 32), and a receiving surface (24; 36) which is so formed on the other extending portion (12; 32) as to enable a contact of the rib (23; 35) therewith.

7. A battery terminal according to claim 6, wherein the rib (23; 35) is formed by bending an outer end of one the extending portion (12; 32) at an angle different from 0° or 180°, preferably substantially at right angles.

8. A battery terminal according to one or more of the preceding claims, wherein the secondary stopper (25; 39) comprises substantially tubular projecting portions (26; 40) formed in the pair of extending portions (12; 32) so as to project substantially toward each other.

9. A battery terminal according to claim 8, wherein the substantially tubular projecting portions (26; 40) are formed by applying burring to the edges of bolt insertion holes (14) of the respective extending portions (12; 32).

10. A battery terminal according to one or more of the preceding claims, wherein both extending portions (12; 32) are formed each with the primary stopper (22; 34) and the secondary stopper (25; 39).

## Patentansprüche

1. Anschlußklemme (A-C) für Batterie, umfassend:
einen gebogenen bzw. gekrümmten Festlegungsabschnitt (11; 31), welcher an einem Batteriepol (P) festzulegen ist,
ein Paar von sich erstreckenden Abschnitten (12; 32), welche sich von dem gebogenen Festlegungsabschnitt (11; 31) erstrecken, und
Festlegungsmittel bzw. -einrichtungen (15) zum Deformieren des Festlegungsabschnitts (11; 31), um seinen Durchmesser zu reduzieren, indem das Paar von sich erstreckenden Abschnitten (12; 32) näher zueinander gebracht wird,
worin das Paar von sich erstreckenden Abschnitten (12; 32) umfaßt:
einen primären bzw. ersten Anschlag (22; 34), um jegliche weitere Annäherung der sich erstreckenden Abschnitte (12; 32) in bezug zueinander zu beschränken, indem sie in einen Kontaktzustand gebracht werden, wenn ein Abstand zwischen den sich erstreckenden Abschnitten (12; 32) auf ein bestimmtes Ausmaß verringert wird, **dadurch gekennzeichnet, daß**
die Anschlußklemme für eine Batterie weiters einen sekundären bzw. zweiten Anschlag (25; 39) umfaßt, um jegliche weitere Annäherung der sich erstreckenden Abschnitte (12; 32) in bezug aufeinander zu beschränken, indem.sie im wesentlichen in einen Kontaktzustand gebracht werden, wenn der Abstand zwischen den sich erstreckenden Abschnitten (12; 32) weiter von dem Zustand verringert wird, wo sich der primäre Anschlag (22; 34) im wesentlichen in dem Kontaktzustand befindet, während er durch eine Deformation des primären Anschlags (22; 34) und/oder der sich erstreckenden Abschnitte (12; 32) begleitet ist.

2. Anschlußklemme für Batterie nach Anspruch 1, worin sich die sich erstreckenden Abschnitte (12; 32) radial nach außen von gegenüberliegenden Enden des gebogenen Festlegungsabschnitts (11; 31) erstrecken.

3. Anschlußklemme für Batterie nach einem oder mehreren der vorangehenden Ansprüche, worin eine elastische Rückstellkraft des primären Anschlags (22; 34) und/oder der erstreckenden Abschnitte (12; 32), welche deformiert sind, wirkt, um die sich erstreckenden Abschnitte (12; 32) voneinander zu trennen, während der sekundäre Anschlag (25; 39) jegliche weitere Annäherung der sich erstreckenden Abschnitte (12; 32) in bezug aufeinander beschränkt.

4. Anschlußklemme für Batterie nach einem oder mehreren der vorangehenden Ansprüche, worin das Paar von sich erstreckenden Abschnitten (12; 32) näher zueinander mit Hilfe eines Bolzens (16) und einer Mutter (17) der Festlegungsmittel (15) gebracht wird.

5. Anschlußklemme für Batterie nach Anspruch 4, worin ein Wert eines Festlegungsdrehmoments, welches erforderlich ist, um eine Funktion eines Beschränkens jeglicher weiterer Annäherung der sich erstreckenden Abschnitte (12; 32) zueinander durch ein Deformieren des sekundären Anschlags (25; 39) aufzuheben, größer eingestellt ist als ein Festlegungsdrehmoment, welches erforderlich ist, um den Bolzen (16) zu brechen.

6. Anschlußklemme für Batterie nach einem oder mehreren der vorangehenden Ansprüche, worin der primäre Anschlag (22; 34) wenigstens eine Rippe (23; 35), welche an einem sich erstreckenden Abschnitt (12; 32) ausgebildet ist, und eine aufnehmende bzw. Aufnahmeoberfläche (24; 36) umfaßt, welche so an dem anderen sich erstreckenden Abschnitt (12; 32) ausgebildet ist, um einen Kontakt der Rippe (23; 35) damit zu ermöglichen.

7. Anschlußklemme für Batterie nach Anspruch 6, worin die Rippe (23; 35) durch ein Biegen eines äußeren Endes von einem sich erstreckenden Abschnitt (12; 32) unter einem von 0° oder 180° verschiedenen Winkel, vorzugsweise im wesentlichen unter rechten Winkeln ausgebildet ist.

8. Anschlußklemme für Batterie nach einem oder mehreren der vorangehenden Ansprüche, worin der sekundäre Anschlag (25; 39) im wesentlichen rohrförmige vorragende Abschnitte (26; 40) umfaßt, welche in dem Paar von sich erstreckenden Abschnitten (12; 32) ausgebildet sind, um im wesentlichen zueinander vorzuragen.

9. Anschlußklemme für Batterie nach Anspruch 8, worin die im wesentlichen rohrförmigen vorragenden Abschnitte (26; 40) durch ein Anbringen bzw. Anwenden eines Entgratens an den Rändern bzw. Kanten von Bolzeneinsetzlöchern (14) der entsprechenden, sich erstreckenden Abschnitte (12; 32) ausgebildet sind.

10. Anschlußklemme für Batterie nach einem oder mehreren der vorangehenden Ansprüche, worin beide sich erstreckende Abschnitte (12; 32) mit dem primären Anschlag (22; 34) und dem sekundären Anschlag (25; 39) ausgebildet sind.

## Revendications

1. Borne de batterie (A-C), comprenant :
une partie de fixation courbe (11 ; 31) à monter sur un pôle de batterie (P),
deux parties de prolongement (12 ; 32) s'étendant à partir de la partie de fixation courbe (11 ; 31), et
un moyen de serrage (15) pour déformer la partie de fixation (11 ; 31) afin de réduire son diamètre par rapprochement mutuel des deux parties de prolongement (12 ; 32),
dans laquelle les deux parties de prolongement (12 ; 32) comprennent :
une butée principale (22 ; 34) pour empêcher tout rapprochement mutuel supplémentaire des parties de prolongement (12 ; 32), par amenée de la butée à un état de contact lorsqu'un intervalle entre les parties de prolongement (12 ; 32) est réduit à un degré spécifié,
**caractérisée en ce que** :
la borne de batterie comprend en outre une butée secondaire (25 ; 39) pour empêcher tout nouveau rapprochement mutuel des parties de prolongement (12 ; 32), par amenée de cette butée sensiblement à un état de contact lorsque l'intervalle entre les parties de prolongement (12 ; 32) est à nouveau réduit par rapport à la situation dans laquelle la butée principale (22 ; 34) est sensiblement dans l'état de contact, ce mouvement étant accompagné par une déformation de la butée principale (22 ; 34) et/ou des parties de prolongement (12 ; 32).

2. Borne de batterie selon la revendication 1, dans lequel les parties de prolongement (12 ; 32) s'étendent radialement vers l'extérieur à partir des extrémités opposées de la partie de fixation courbe (11 ; 31).

3. Borne de batterie selon une ou plusieurs des revendications précédentes, dans laquelle une force de restauration élastique de la butée principale (22 ; 34) et/ou des parties de prolongement (12 ; 32) déformées agit de manière à éloigner les parties de prolongement (12 ; 32) l'une de l'autre tandis que la butée secondaire (25 ; 39) empêche tout rapprochement mutuel supplémentaire des parties de prolongement (12 ; 32).

4. Borne de batterie selon une ou plusieurs des revendications précédentes, dans laquelle les deux parties de prolongement (12 ; 32) sont rapprochées l'une de l'autre au moyen d'une vis (16) et d'un écrou (17) des moyens de serrage (15).

5. Borne de batterie selon la revendication 4, dans laquelle une valeur d'un couple de serrage nécessaire pour vaincre une fonction d'empêchement de tout nouveau rapprochement mutuel des parties de prolongement (12 ; 32), par déformation de la butée secondaire (25 ; 39), est fixée à une valeur supérieure à celle d'un couple de serrage nécessaire pour casser la vis (16).

6. Borne de batterie selon une ou plusieurs des revendications précédentes, dans laquelle la butée principale (22 ; 34) comprend au moins une nervure (23 ; 35) formée sur une partie de prolongement (12 ; 32), et une surface de réception (24 ; 36) qui est formée sur l'autre partie de prolongement (12 ; 32) de façon à permettre un contact de la nervure (23 ; 35) avec la dite surface.

7. Borne de batterie selon la revendication 6, dans laquelle la nervure (23 ; 35) est formée par pliage d'une extrémité extérieure de la première partie de prolongement (12 ; 32) suivant un angle différent de zéro degré ou 180 degrés, de préférence sensiblement à angle droit.

8. Borne de batterie selon une ou plusieurs des revendications préécédentes, dans laquelle la butée secondaire (25 ; 39) comprend des parties en saillie sensiblement tubulaires (26 ; 40) formées dans les deux parties de prolongement (12 ; 32), de façon à faire saillie sensiblement l'une vers l'autre.

9. Borne de batterie selon la revendication 8, dans laquelle les parties en saillie sensiblement tubulaires (26 ; 40) sont formées par application d'un matage aux bords des trous d'insertion de vis (14) des parties de prolongement respectives (12 ; 32).

10. Borne de batterie selon une ou plusieurs des revendications précédentes, dans laquelle les deux parties de prolongement (12 ; 32) sont formées chacune avec la butée principale (22 ; 34) et la butée secondaire (25 ; 39).
